# FASCICULE DE BREVET EUROPEEN

(11) **EP 2 021 647 B1**
(45) Date de publication et mention de la délivrance du brevet: **29.06.2011**
(21) Numéro de dépôt: 07766084.3
(22) Date de dépôt: 22.05.2007
(51) Int. Cl.: F16D 27/00, F16D 13/75

(54) **ACTIONNEUR A RATTRAPAGE DE COURSE, EN PARTICULIER POUR UN EMBRAYAGE DE VEHICULE AUTOMOBILE**
WEGMINDERUNGSAKTUATOR, SPEZIELL FÜR EINE KRAFTFAHRZEUGKUPPLUNG
UNDER TRAVEL ACTUATOR, PARTICULARLY FOR AN AUTOMOBILE CLUTCH

(30) Priorité: 29.05.2006 FR 0651935
(43) Date de publication de la demande: 11.02.2009
(73) Titulaire: Valeo Embrayages, 80009 Amiens Cedex 2 (FR)
(72) Inventeur: MAUREL, Hervé, 80000 Amiens (FR)
(74) Mandataire: Jeuland, Mickaël
(86) Numéro de dépôt international: PCT/FR2007/051311
(87) Numéro de publication internationale: WO 2007/138216

(56) Documents cités:
- WO-A-2005/028900
- FR-A1- 2 663 887
- US-A- 5 954 178

## Description

L'invention concerne un actionneur à rattrapage de course, en particulier pour un embrayage de véhicule automobile.

Un actionneur selon le préambule de la revendication 1 est connu de US-A-5 954 178.

Un actionneur de ce type comprend un moto-réducteur électrique qui entraîne en translation un élément menant, tel par exemple qu'une tige de poussée, agissant directement ou non sur le système à commander, par exemple sur une butée d'embrayage.

Lorsque l'actionneur est du type à compensation d'effort, il comprend en général un ressort de compensation qui agit sur une came ou une rampe inclinée liée à l'élément menant pour solliciter cet élément dans le sens correspondant à l'ouverture de l'embrayage et qui équilibre approximativement l'effort résistant fourni par le ressort de rappel de l'embrayage, de sorte que l'effort fourni par le moto-réducteur pour l'actionnement de l'embrayage est réduit à une valeur minimale.

L'usure des garnitures de friction de l'embrayage se traduit par un déplacement de la butée d'embrayage et donc de l'élément menant, par une modification de la course de cet élément et par une modification plus ou moins importante de l'effort de commande, selon les réalisations.

On a déjà proposé de nombreux systèmes de rattrapage d'usure qui sont en général intégrés à l'embrayage pour compenser l'usure des garnitures de friction au fur et à mesure qu'elle se produit, de sorte que cette usure n'a plus d'effet sur la position de la butée d'embrayage et sur la course de l'élément menant.

Ces dispositifs connus sont toutefois relativement complexes et leur fonctionnement se révèle souvent peu précis et peu fiable en pratique.

Une autre solution consisterait à régler la longueur de l'élément menant de l'actionneur en fonction de l'usure des garnitures de l'embrayage de telle sorte que ce réglage de longueur compense le déplacement de la butée d'embrayage qui est dû à l'usure des garnitures.

La présente invention a notamment pour but de répondre à ce besoin de façon simple, efficace et économique.

Elle a pour objet un actionneur à rattrapage de course, applicable notamment à la commande d'un embrayage de véhicule automobile et qui comprend des moyens de réglage de la longueur de l'élément menant d'une façon permettant de compenser l'usure des garnitures de friction de l'embrayage.

Elle propose à cet effet un actionneur à rattrapage de course, en particulier pour un embrayage de véhicule automobile, comprenant un élément menant et un moyen moteur d'entraînement de l'élément menant sur une course aller et retour, caractérisé en ce qu'il comprend également :
- des moyens de rattrapage de course qui relient le moyen moteur à l'élément menant et qui sont déplaçables en translation par le moyen moteur sur une course de réglage et sur une course d'entraînement de l'élément menant, ces moyens de rattrapage comprenant un organe de réglage de position d'une butée d'entraînement de l'élément menant,
- et deux moyens conjugués d'entraînement unidirectionnel qui sont portés par le carter de l'actionneur et qui coopèrent avec l'organe de réglage pour le déplacer d'un pas dans un sens ou dans l'autre quand les moyens de rattrapage sont déplacés par le moyen moteur dans un sens ou dans l'autre respectivement depuis une position intermédiaire de leur course de réglage.

Ainsi, selon l'invention, les moyens de rattrapage de course, notamment pour le rattrapage d'usure des garnitures de friction d'un embrayage, sont intégrés à l'actionneur et non à l'embrayage et sont donc soumis à des contraintes beaucoup plus faibles, ce qui améliore leur fiabilité et leur précision de fonctionnement.

Selon une autre caractéristique de l'invention, les moyens de rattrapage de course comprennent un coulisseau guidé en translation dans le carter de l'actionneur et entraîné par le moyen moteur sur les courses de réglage et d'entraînement précitées, et un système vis-écrou porté par le coulisseau, la vis formant la butée d'entraînement de l'élément menant et étant guidée en translation et immobilisée en rotation dans le coulisseau, l'écrou étant vissé sur la vis et guidé en rotation sur le coulisseau et comportant une denture extérieure coopérant avec les deux moyens conjugués d'entraînement unidirectionnel quand le coulisseau est déplacé sur la course de réglage.

Dans un mode de réalisation préféré de l'invention, les moyens conjugués d'entraînement unidirectionnel comprennent deux bagues montées à rotation dans le coulisseau et présentant une denture intérieure destinée à coopérer avec la denture extérieure de l'écrou, ces deux bagues étant associées à des moyens élastiques de rappel qui les sollicitent en rotation dans des sens opposés pour les amener en appui sur des butées formées sur le coulisseau.

Les dentures intérieures des deux bagues sont en forme de V très ouvert et comprennent une première partie oblique par rapport à l'axe de la bague et une seconde partie parallèle à l'axe de la bague, les parties obliques des dents d'une des bagues étant parallèles aux parties obliques des dents de l'autre bague et orientées dans des directions opposées.

Les dents extérieures de l'écrou sont en forme de losange et ont deux faces parallèles à l'axe de l'écrou et deux faces obliques par rapport à l'axe de l'écrou, ces faces obliques étant parallèles aux faces obliques des dents internes des bagues.

Les faces obliques des dents des bagues et de l'écrou sont parallèles au filet de la vis et orientées dans le même sens.

De préférence, pour augmenter la longueur de l'élément menant, le coulisseau est déplacé dans le sens du rappel de l'embrayage.

Les courses de réglage et d'entraînement des moyens de rattrapage sont bout à bout dans une réalisation de l'invention. En variante, elles peuvent se chevaucher partiellement.

Dans une forme de réalisation intéressante, l'actionneur est du type à compensation d'effort et comprend au moins un ressort de compensation qui agit par l'intermédiaire d'un organe roulant sur une came ou rampe inclinée liée à l'élément menant, dans le sens correspondant à l'ouverture de l'embrayage.

De façon générale, l'actionneur selon l'invention est applicable, non seulement à la commande d'un embrayage, mais également à celle d'une boîte de vitesses ou d'un moyen de freinage d'un véhicule automobile.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective et en arrachement partiel d'un actionneur selon l'invention ;
- la figure 2 est une vue à plus grande échelle des moyens de rattrapage de course de l'actionneur de la figure 1 ;
- les figures 3 et 4 sont des vues schématiques en perspective et à plus grande échelle d'un écrou et d'un moyen d'entraînement unidirectionnel des moyens de rattrapage de course ;
- la figure 5 illustre schématiquement les étapes de fonctionnement des moyens de rattrapage de course selon l'invention ;
- les figures 6 et 7 sont des vues schématiques en perspective illustrant une variante de réalisation de l'invention.

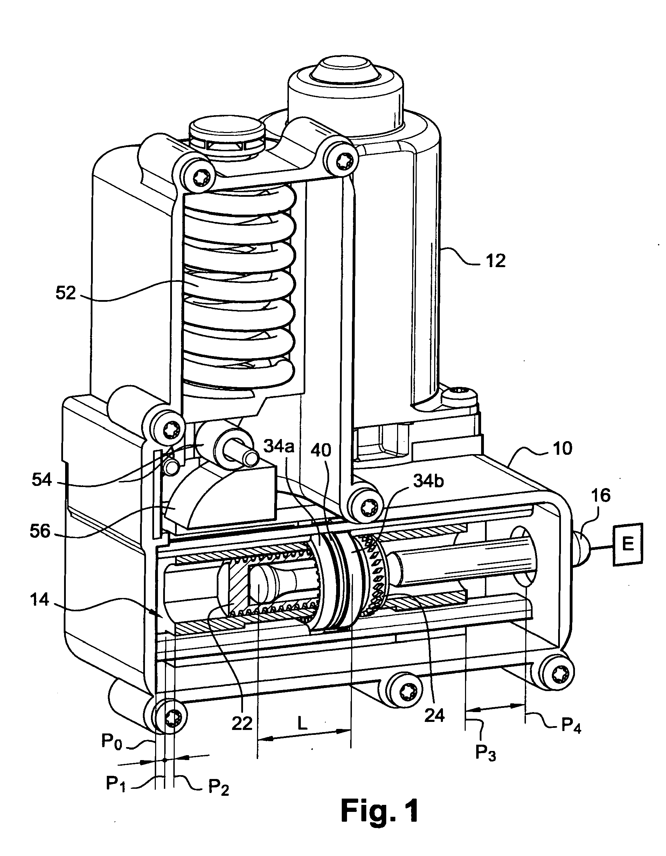

L'actionneur représenté en figure 1 est destiné à la commande d'un embrayage de véhicule automobile et comprend essentiellement un carter 10 portant un moteur électrique 12 dont l'arbre de sortie est relié par un réducteur et une crémaillère (non représentés) à un équipage mobile 14 guidé en translation dans le carter 10 perpendiculairement à l'axe du moteur électrique 12, cet équipage mobile agissant par l'intermédiaire d'une tige de poussée 16 sur un organe de l'embrayage E, par exemple sur une butée d'embrayage.

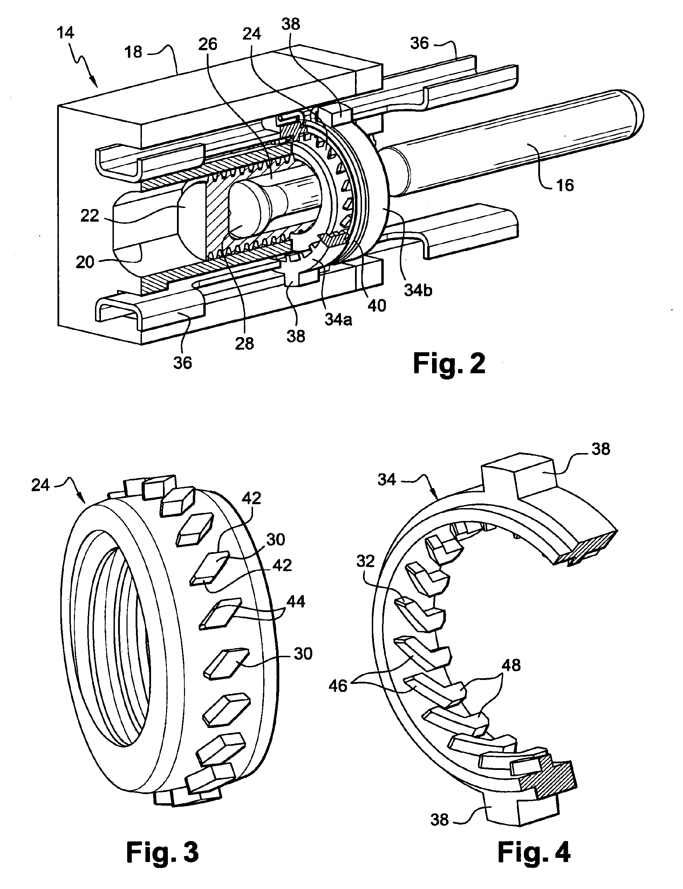

L'équipage mobile 14, que l'on voit mieux en figure 2, comprend essentiellement un coulisseau 18 entraîné par le moteur électrique 12 et relié à la tige de poussée 16 par des moyens de rattrapage de course qui permettent de compenser le déplacement axial de la tige de poussée 16 qui résulte de l'usure des garnitures de friction de l'embrayage.

Pour cela, le coulisseau 18 comporte un passage axial 20 dans lequel une vis 22 est guidée en translation et immobilisée en rotation, par exemple au moyen d'un méplat formé sur un côté de la vis 22 et guidé par une face plane correspondante du passage 20.

La vis 22 est déplacée en translation dans le passage 20 au moyen d'un écrou 24 qui est vissé sur la vis 22 et qui est guidé en rotation dans un logement annulaire du coulisseau 6, la rotation de l'écrou 24 dans ce logement étant transformée par le filetage interne de l'écrou en prise avec le filetage externe de la vis 22, en une translation axiale de la vis 22 à l'intérieur du coulisseau 18.

La vis 22 est de forme tubulaire et comporte un passage axial cylindrique 26 débouchant du côté de la tige de poussée 16 et fermé à son extrémité opposée par un fond sur lequel s'appuie une tête de rotule 28 formée à l'extrémité de la tige de poussée 16. Ainsi, une translation axiale de la vis 22 à l'intérieur du coulisseau 18 se traduit par une variation de la longueur apparente de la tige de poussée 16, permettant de compenser le décalage axial de cette tige de poussée dû à l'usure des garnitures de friction de l'embrayage.

L'écrou 24 comporte une denture externe formée de losanges 30 répartis sur sa périphérie (figure 3) et qui est destinée à coopérer avec les dentures internes 32 de deux bagues 34a, 34b d'entraînement unidirectionnel (figure 4) qui sont montées à rotation limitée à l'intérieur du coulisseau 18 et sont immobilisées en translation axiale par rapport au carter 10.

Ces deux bagues sont destinées à être traversées axialement par l'écrou 24 quant le coulisseau 18 est déplacé axialement dans un sens et dans l'autre par le moteur électrique 12, à partir d'une position intermédiaire P1 de sa course, de réglage, définie entre des positions P0 et P2 pour lesquelles le fond de la vis 22 n'est pas en appui sur la tête 28 de la tige de poussée 16 (figure 1). L'autre course du coulisseau est définie par des positions P3 et P4 et correspond au déplacement de la tige de poussée 16 pour l'ouverture et la fermeture de l'embrayage.

Les deux bagues 34a et 34b d'entraînement unidirectionnel portées par le coulisseau 18 sont associées à des butées axiales et angulaires 36 portées par le carter 10, qui limitent les déplacements axiaux et angulaires de ces bagues pendant les déplacements du coulisseau 18, grâce à des butées ou des dents 38 formées en saillie sur les périphéries extérieures des bagues et venant en appui sur les butées 36.

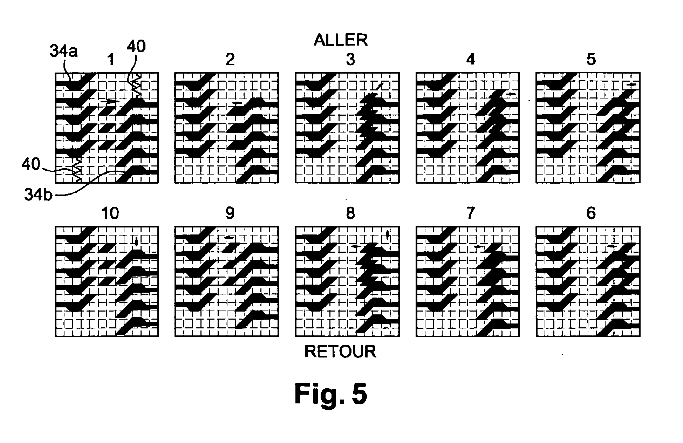

Un ressort annulaire de rappel 40 est monté entre les deux bagues 34a et 34b et ses extrémités prennent appui sur les butées extérieures 38 de ces bagues pour les écarter angulairement l'une de l'autre. La denture externe 30 de l'écrou 24 et les dentures internes 32 des bagues 34a, 34b sont conçues de façon à faire tourner l'écrou 24 d'un pas autour de son axe quand cet écrou est déplacé dans un sens à travers une bague 34a ou 34b et à ne pas le faire tourner autour de son axe quand il est déplacé en sens inverse à travers cette bague 34a ou 34b, comme cela va être décrit plus en détail à l'aide de la figure 5.

Les dents extérieures 30 de l'écrou 24, en forme de losange, comprennent deux faces 42 parallèles à l'axe de l'écrou et deux faces obliques 44 sensiblement parallèles entre elles et reliant les deux faces 42. Les deux faces 42 peuvent être sensiblement planes. Idéalement, les deux faces 42 forment des surfaces hélicoïdales

Les dents internes 32 des bagues 34a et 34b comprennent chacune une première partie 46 située du côté de l'écrou, qui est oblique par rapport à l'axe de la bague et une seconde partie 48 du côté opposé à l'écrou, qui est parallèle à l'axe de la bague. De même que pour les faces 42, la partie 46 peut être sensiblement plane. Idéalement cette partie 46 est de forme hélicoïdale.

Les premières parties obliques 46 des dents 32 sont parallèles aux faces obliques 44 des dents externes 30 de l'écrou 24.

Par ailleurs, les parties obliques 46 des dents de la bague 34a sont orientées en sens contraire des parties obliques 46 des dents de l'autre bague 34b, comme on peut le voir clairement en figure 5.

Dans cette figure, les différentes étapes du déplacement de l'écrou 24 dans un sens et dans l'autre par rapport aux bagues 34a et 34b depuis la position intermédiaire P1 sont représentées par des chiffres de 1 à 10.

En figure 5-1, l'écrou 24 est dans la position P1, et ses dents extérieures 30 sont à mi-chemin entre les bagues 34a et 34b.

En figure 5-2, l'écrou 24 a été déplacé en direction de la bague 34b, c'est-à-dire vers la position P2, et ses dents externes 30 sont en appui sur les extrémités des parties obliques 46 des dents de la bague 34b. Dans cette position, la bague 34b est en appui sur une butée fixe 36 et ne peut tourner autour de son axe dans le sens correspondant à une flèche orientée vers le bas en figure 5-2.

En figure 5-3, l'écrou 24 a encore été déplacé vers la position P2 et ses dents 30, en glissant sur les parties obliques 46 des dents de la bague 34b, ont fait tourner l'écrou d'un pas dans le sens d'une flèche orientée vers le haut.

En figure 5-4, la rotation d'un pas de l'écrou 24 est achevée, les dents 30 de l'écrou sont en appui sur les parties rectilignes 48 des dents de la bague 34b et le déplacement de l'écrou vers la position P2 ne provoque pas de rotation supplémentaire de l'écrou.

Quand ensuite, comme représenté en figure 5-6, l'écrou 24 est déplacé en sens contraire et ramené vers la position P1, le déplacement de ses dents 30 le long des parties rectilignes 48 des dents de la bague 34b ne provoque aucune rotation de l'écrou ou de la bague, jusqu'à la position représentée en figure 5-7.

Le déplacement de l'écrou vers la position P1 se poursuivant, les dents 30 de l'écrou viennent en appui sur les parties obliques 46 des dents de la bague 34b comme représenté en figure 5-8 et font tourner celle-ci dans le sens représenté par une flèche orientée vers le haut, jusqu'à ce que les dents 30 de l'écrou échappent aux dents de la bague 34b comme représenté en figure 5-9 et arrivent dans la position représentée en figure 5-10 qui correspond à la position P1 de l'écrou.

Quand les dents 30 de l'écrou 24 échappent aux dents 32 de la bague 34b, celle-ci est ramenée dans sa position initiale par le ressort de rappel 40 et tourne donc dans le sens représenté par la flèche orientée vers le bas en figure 5-10.

On voit que ce déplacement aller et retour de l'écrou 24 entre les positions P1 et P2 a eu pour effet de faire tourner l'écrou d'un pas autour de son axe, dans un sens déterminé par l'inclinaison des parties obliques 46 des dents de la bague 34b.

Quand l'écrou 24 est déplacé dans l'autre sens, c'est-à-dire entre ses positions P1 et P0, l'autre bague 34a le fait tourner d'un pas dans l'autre sens à chaque aller et retour.

Chaque rotation de l'écrou 34 sur un pas dans un sens ou dans l'autre se traduit par un pas de translation axiale de la vis 22, dans un sens ou dans l'autre, par rapport au coulisseau 18 et donc par un allongement ou par un raccourcissement apparent de la tige de poussée 16.

En réglant convenablement les butées fixes 36 qui limitent les déplacements axiaux et angulaires des bagues 34a et 34b, on peut définir les positions axiales. P0 et P2 qui délimitent la course de réglage, par rapport aux positions P3 et P4 qui délimitent la course d'entraînement.

Dans l'exemple représenté schématiquement en figure 1, on voit que le coulisseau 18 peut être déplacé entre ses positions P0 et P2 sans modifier la position de la tige de poussée 16, et que cette course de réglage est séparée de la course du coulisseau sur laquelle il entraîne la tige de poussée 16.

La longueur L de la vis 22 qui est vissable à l'intérieur de l'écrou représente la course que l'on peut rattraper.

De préférence, pour augmenter la longueur apparente de la tige de poussée 16, on déplace l'équipage mobile 14 dans le sens du rappel de l'embrayage. Cela permet de réduire et d'uniformiser les efforts de réglage.

Il est avantageux également, pour cela, que les surfaces hélicoïdales du filet de la vis 22 et les parties obliques des dents des bagues 34a et 34b soient orientées dans le même sens.

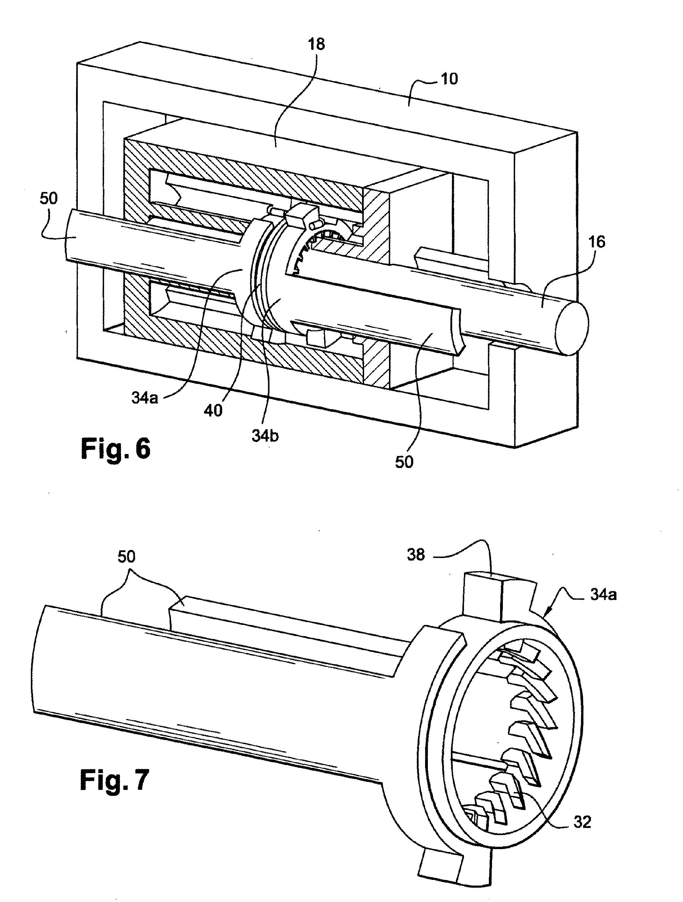

Les figures 6 et 7 représentent schématiquement une variante de réalisation dans laquelle chaque bague 34a, 34b est solidaire de deux pattes longitudinales parallèles permettant de la positionner correctement par rapport au coulisseau dans le carter de l'actionneur.

Les pattes 50 de la bague 34a située du côté opposé à l'embrayage s'étendent du côté opposé à l'embrayage tandis que les pattes 50 de la bague 34b située du côté de l'embrayage s'étendent en direction de l'embrayage.

Les pattes 50 sont des portions de cylindre, comme on le voit bien en figure 7, et permettent de limiter la rotation et le déplacement axial de chaque bague 34a, 34b par butée sur le carter 10 de l'actionneur.

Par ailleurs, l'actionneur selon l'invention est avantageusement du type à compensation d'effort et comprend, comme représenté en figure 1, un ressort de compression 52 agencé dans le carter 10 parallèlement au moteur et agissant, par l'intermédiaire d'un organe roulant 54, sur une rampe inclinée ou sur une came 56 portée par l'équipage mobile 14. La force appliquée par le ressort 52 à l'équipage mobile sollicite celui-ci dans le sens de l'ouverture de l'embrayage, ce qui réduit d'autant le couple que le moteur 12 doit fournir pour l'actionnement de l'embrayage.

## Revendications

1. Actionneur à rattrapage de course, en particulier pour un embrayage de véhicule automobile, comprenant un élément menant (16) et un moyen moteur (12) d'entraînement de l'élément menant sur une course aller et retour, et des moyens (14) de rattrapage de course qui relient le moyen moteur (12) à l'élément menant (16) et qui sont déplaçables en translation par le moyen moteur sur une course (P0-P2) de réglage et sur une course (P3-P4) d'entraînement de l'élément menant (16), ces moyens de rattrapage comprenant des moyens (22, 24) de réglage de position d'une butée d'entraînement de l'élément menant et deux moyens conjugués (34a, 34b) d'entraînement unidirectionnel qui sont portés par le carter (10) de l'actionneur et qui coopèrent avec les moyens de réglage pour les déplacer d'un pas dans un sens ou dans l'autre quand les moyens de rattrapage (14) sont déplacés par le moyen moteur dans un sens ou dans l'autre depuis une position intermédiaire (P1) de leur course de réglage, **caractérisé en ce que** les moyens de rattrapage (14) comprennent un coulisseau (18) guidé en translation dans le carter (10) de l'actionneur et entraîné par le moyen moteur (12) sur les courses de réglage et d'entraînement précitées, et un système vis-écrou (22, 24) porté par le coulisseau (18), la vis (22) formant la butée d'entraînement de l'élément menant (16) et étant guidée en translation et immobilisée en rotation dans le coulisseau (18), l'écrou (24) étant vissé sur la vis et guidé en rotation sur le coulisseau et comportant une denture extérieure (30) coopérant avec les deux moyens conjugués d'entraînement unidirectionnel (34a, 34b) quand le coulisseau (18) est déplacé sur la course de réglage précitée.

2. Actionneur selon la revendication 1, **caractérisé en ce que** les moyens conjugués d'entraînement unidirectionnel comprennent deux bagues (34a, 34b) montées à rotation autour du coulisseau (18) et présentant une denture intérieure (32) destinée à coopérer avec la denture extérieure (30) de l'écrou (24), ces deux bagues étant associées à des moyens élastiques de rappel (40) qui les sollicitent en rotation dans des sens opposés pour les amener en appui sur des butées formées sur le coulisseau (18).

3. Actionneur selon la revendication 2, **caractérisé en ce que** les dentures intérieures des bagues (34a, 34b) sont en forme de V très ouvert et comprennent une première partie (46) oblique par rapport à l'axe de la bague et une seconde partie (48) parallèle à l'axe de la bague, les parties obliques (46) des dents d'une des bagues étant parallèles aux parties obliques (46) des dents de l'autre bague et s'étendant dans des directions opposées.

4. Actionneur selon la revendication 3, **caractérisé en ce que** les dents extérieures de l'écrou (24) sont en forme de losange et ont deux faces (42) parallèles à l'axe de l'écrou et deux faces (44) obliques par rapport à l'axe de l'écrou, ces faces obliques étant parallèles aux faces obliques (46) des dents internes des bagues (34a, 34b).

5. Actionneur selon la revendication 4, **caractérisé en ce que** les faces obliques (44, 46) des dents de l'écrou et des bagues sont parallèles au filet de la vis (22) et orientées dans le même sens.

6. Actionneur selon l'une des revendications 2 à 5, **caractérisé en ce que** les bagues (34a, 34b) comportent des pattes longitudinales (50) coopérant avec le carter (10) de l'actionneur pour limiter les déplacements longitudinaux et angulaires des bagues.

7. Actionneur selon l'une des revendications 1 à 6, **caractérisé en ce que** la vis (22) est tubulaire et l'extrémité correspondante de l'élément menant (16) est engagée à l'intérieur de la vis (22).

8. Actionneur selon la revendication 7, **caractérisé en ce que** l'extrémité de l'élément menant (16) engagée à l'intérieur de la vis (22) forme une rotule venant en appui sur une paroi de fond de la vis (22).

9. Actionneur selon l'une des revendications précédentes, **caractérisé en ce que**, pour augmenter la longueur de l'élément menant (16), le coulisseau (18) est déplacé dans le sens du rappel de l'embrayage.

10. Actionneur selon l'une des revendications précédentes, **caractérisé en ce que** les courses de réglage et d'entraînement des moyens de rattrapage sont jointives.

11. Actionneur selon l'une des revendications 1 à 9, **caractérisé en ce que** les courses de réglage et d'entraînement des moyens de rattrapage se chevauchent partiellement.

12. Actionneur selon l'une des revendications précédentes, **caractérisé en ce qu'**il est du type à compensation d'effort et comprend au moins un ressort de compensation (52) qui agit par l'intermédiaire d'un organe roulant (54) sur une came ou une rampe (56) portée par les moyens de rattrapage (14) et qui sollicite ces moyens de rattrapage dans le sens correspondant à l'ouverture de l'embrayage.

## Claims

1. Travel compensation actuator, in particular for a motor vehicle, comprising a driving mechanism (16) and a motor (12) driving the driving mechanism along an outward and a return path, and means (14) for compensating travel which connect the motor (12) to the drive mechanism (16) and which can be displaced by the said motor along an adjustment path (P0-P2) and along a drive path (P3-P4) of the driving mechanism (16), these compensating means comprising means (22, 24) for adjusting the position of a drive stop of the driving mechanism and two combined means (34a, 34b) for unidirectional travel which are mounted on the casing (10) of the actuator and which operate in conjunction with the means of adjustment in order to rotate them by one turn in one direction or the other when the compensating means (14) are displaced by the motor in one direction or the other from an intermediary position (P1) of their adjustment course , **characterized in that** the said compensating means (14) comprise a slide element (18), which is displaced within the casing (10) of the actuator and driven by the motor (12) along the said adjustment and drive paths, and a screw-nut system (22, 24) mounted on the slide member (18), in which the screw (22) constituting the drive stop of the driving mechanism (16) and being displaced and arrested in rotation in the slide member (18), the nut (24) being screwed onto the screw, rotated on the slide member and comprising an outer toothing (30) that works in conjunction with the two combined means of unidirectional travel (34a, 34b) when the slide member (18) travels along the said adjustment path.

2. Actuator in accordance with claim 1 above, **characterised in that** the combined means of unidirectional travel comprise two rings (34a, 34b) mounted in a rotational manner around the slide member (18) and having an inner toothing (32) intended to work in conjunction with the outer toothing (30) of the nut (24), with these two rings being associated with elastic means of return (40), which induce them to rotate in opposite directions until they come to rest against the stops formed on the slide member (18).

3. Actuator in accordance with claim 2 above, **characterised in that** the internal toothing of the rings (34a, 34b) is in the form of a very open V and comprises a first part (46) that is oblique in relation to the axis of the ring and a second part (48) that is parallel to the axis of the ring, with the oblique parts (46) of the teeth of one of the rings being parallel to the oblique parts (46) of the teeth of the other ring and stretching in opposite directions.

4. Actuator in accordance with claim 3 above, **characterised in that** the outer teeth of the nut (24) are in the shape of a diamond and have two faces (42) that are parallel to the axis of the nut and two faces (44) that are oblique in relation to the axis of the nut, with these oblique faces being parallel to the oblique faces (46) of the internal teeth of the rings (34a, 34b).

5. Actuator in accordance with claim 4 above, **characterised in that** the oblique faces (44, 46) of the teeth of the nut and the rings are parallel to the thread of the screw (22) and orientated in the same direction.

6. Actuator in accordance with any of the claims 2 to 5 above, **characterised in that** the rings (34a, 34b) comprise longitudinal legs (50) that work in conjunction with the casing (10) of the actuator to limit the longitudinal and angular displacement of the rings.

7. Actuator in accordance with any of the claims 1 to 6 above **characterised in that** the screw (22) is tubular in shape and the corresponding end of the driving mechanism (16) is engaged in the interior of the screw (22).

8. Actuator in accordance with claim 7 above, **characterised in that** the end of the driving mechanism (16) that is engaged in the interior of the screw (22) is in the form of a head-shaped piece that comes to rest against a rear wall of the screw (22).

9. Actuator in accordance with any one of the above claims, **characterised in that**, in order to increase the length of the driving mechanism (16), the slide member is displaced in the direction of the return of the clutch. 12

10. Actuator in accordance with any one of the above claims, **characterised in that** the adjustment and the drive paths of the compensating means are contiguous.

11. Actuator in accordance with any of the claims 1 to 9 above, **characterised in that** the adjustment and drive paths of the compensating means are partially overlapping.

12. Actuator in accordance with any of the above claims, **characterised in that** it is of the effort compensating type and comprises at least one compensation spring (52) acting through the intermediary of a mobile element (54) on a cam or a ramp i(56) carried by the compensating means (14) and exerting a force on these compensating means in the direction corresponding to the opening of the clutch.

## Patentansprüche

1. Stellorgan zur Weg-Nachstellung, insbesondere für eine Kraftfahrzeugkupplung, umfassend ein Antriebselement (16) und ein Motormittel (12) zum Antreiben des Antriebselements über einen Hin- und Rück-Weg, und Weg-Nachstellmittel (14), die das Motormittel (12) mit dem Antriebselement (16) verbinden und die durch das Motormittel über einen Regelungsweg (P0-P2) sowie über einen Weg (P3-P4) zum Antreiben des Antriebselements (16) translatorisch verschiebbar sind, wobei die Nachstellmittel (14) Mittel (22, 24) zur Regelung der Position eines Anschlags zum Antreiben des Antriebselements und zwei miteinander verbundene Mittel (34a, 34b) zum einseitig gerichteten Antreiben umfassen, welche von dem Gehäuse (10) des Stellorgans getragen sind und die mit den Regelungsmitteln zusammenwirken um sie in der einen oder anderen Richtung um einen Schritt zu verschieben, wenn die Nachstellmittel (14) von dem Motormittel in der einen oder anderen Richtung von einer Zwischenposition (P1) ihres Regelungsweges aus verschoben werden, **dadurch gekennzeichnet, dass** die Nachstellmittel (14) einen Schieber (18), welcher translatorisch in dem Gehäuse (10) des Stellorgans geführt und von dem Motormittel (12) über die vorgenannten Regelungs- und Antriebswege angetrieben ist, und ein vom Schieber (18) getragenes Schrauben-Mutter-System (22, 24) umfassen, wobei die Schraube (22) den Anschlag zum Antreiben des Antriebselements (16) bildet und translatorisch und drehfest in dem Schieber (18) geführt ist, und wobei die Mutter (24) auf die Schraube geschraubt und rotatorisch an dem Schieber geführt ist und eine äußere Zahnung (30) aufweist, welche mit den beiden miteinander verbundenen Mitteln (34a, 34b) zum einseitig gerichteten Antreiben zusammenwirkt, wenn der Schieber (18) über den vorgenannten Regelungsweg verschoben wird.

2. Stellorgan nach Anspruch 1, **dadurch gekennzeichnet, dass** die beiden miteinander verbundenen Mitteln zum einseitig gerichteten Antreiben zwei Ringe (34a, 34b) umfassen, die drehend zum Schieber (18) gelagert sind und eine innere Zahnung (32) aufweisen, welches dazu bestimmt ist, mit der äußeren Zahnung (30) der Mutter (24) zusammenzuwirken, wobei die beiden Ringe elastischen Rückstellmitteln (40) zugeordnet sind, die sie drehend in einander entgegengesetzten Richtungen beaufschlagen, um sie in Anlage gegen an dem Schieber (18) ausgeformte Anschläge zu bringen.

3. Stellorgan nach Anspruch 2, **dadurch gekennzeichnet, dass** die inneren Zahnungen (32) der Ringe (34a, 34b) die Form eines weit geöffneten V haben und einen schräg zur Achse des Rings ausgerichteten ersten Abschnitt (46) und einen parallel zur Achse des Rings ausgerichteten zweiten Abschnitt (48) umfassen, wobei die schrägen Abschnitte (46) der Zähne eines Rings parallel zu den schrägen Abschnitten (46) der Zähne des anderen Rings verlaufen und sich in entgegengesetzten Richtungen erstrecken.

4. Stellorgan nach Anspruch 3, **dadurch gekennzeichnet, dass** die äußeren Zähne der Mutter (24) rautenförmig sind und zwei parallel zur Achse der Mutter ausgerichtete Flächen (42) und zwei schräg zur Achse der Mutter ausgerichtete Flächen (44) umfassen, wobei diese schrägen Flächen parallel zu den schrägen Flächen (46) der inneren Zähne der Ringe (34a, 34b) verlaufen.

5. Stellorgan nach Anspruch 4, **dadurch gekennzeichnet, dass** die schrägen Flächen (44, 46) der Zähne der Mutter und der Ringe parallel zum Gewinde der Schraube (22) und in dem gleichen Sinn orientiert sind.

6. Stellorgan nach einem der Ansprüche 2 bis 5, **dadurch gekennzeichnet, dass** die Ringe (34a, 34b) längslaufende Klauen (50) aufweisen, die mit dem Gehäuse (10) des Stellorgans zusammenwirken, um die Längs- und Winkelverlagerungen der Ringe zu begrenzen.

7. Stellorgan nach einem der Ansprüche 1 bis 6, **dadurch gekennzeichnet, dass** die Schraube (22) rohrförmig ist und das entsprechende Ende des Antriebselements (16) in das Innere der Schraube (22) eingreift.

8. Stellorgan nach Anspruch 7, **dadurch gekennzeichnet, dass** das in das Innere der Schraube (22) eingreifende Ende des Antriebselements (16) einen Kugelkopf bildet, der in Anlage gegen eine Bodenwand des Schraube (22) kommt.

9. Stellorgan nach einem der vorherigen Ansprüche, **dadurch gekennzeichnet, dass** zur Vergrößerung der Länge des Antriebselements (16) der Schieber (18) im Sinn der Rückstellung der Kupplung verschoben ist.

10. Stellorgan nach einem der vorherigen Ansprüche, **dadurch gekennzeichnet, dass** die Regelungs- und Antriebswege der Nachstellmittel aneinandergesetzt sind.

11. Stellorgan nach einem der Ansprüche 1 bis 9, **dadurch gekennzeichnet, dass** die Regelungs- und Antriebswege der Nachstellmittel sich partiell überlappen.

12. Stellorgan nach einem der vorherigen Ansprüche, **dadurch gekennzeichnet, dass** er vom Typ der Kraftkompensation ist und zumindest eine Kompensationsfeder umfasst (52), die unter Vermittlung eines Rollorgans (54) auf eine von den Nachstellmitteln (14) getragene Nocke oder Rampe wirkt und die die Nachstellmittel in dem dem Öffnen der Kupplung entsprechenden Sinn beaufschlagt.
